**Europäisches Patentamt**

**European Patent Office**

**Office européen des brevets**

(11) Numéro de publication : **0 071 283**
**B1**

(12) **FASCICULE DE BREVET EUROPÉEN**

(45) Date de publication du fascicule du brevet :
18.09.85

(51) Int. Cl.⁴ : **A 23 K   1/175, A 23 K   1/18**

(21) Numéro de dépôt : **82200772.0**

(22) Date de dépôt : **22.06.82**

(54) **Utilisation de peroxyde de calcium pour l'alimentation des porcins et procédé pour l'alimentation des porcins.**

(30) Priorité : **02.07.81 FR 8113209**

(43) Date de publication de la demande :
**09.02.83 Bulletin 83/06**

(45) Mention de la délivrance du brevet :
**18.09.85 Bulletin 85/38**

(84) Etats contractants désignés :
**AT BE CH DE FR GB IT LI NL SE**

(56) Documents cités :
**FR-A- 2 276 001**
**FR-A- 2 319 304**
**FR-A- 2 345 940**
**FR-A- 2 473 270**
**CHEMICAL ABSTRACTS, vol. 89, no. 3, 17 juillet 1978,
page 538, no. 22747p, Columbus Ohio (USA);**

(73) Titulaire : **INTEROX Société anonyme dite:**
**Rue du Prince Albert, 33**
**B-1050 Bruxelles (BE)**

(72) Inventeur : **Gago, Ignace**
**Chaussée de Nivelles, 53**
**B-1420 Braine-l'Alleud (BE)**
Inventeur : **Coppens, Guillaume**
**Avenue Louis Jasmin, 89**
**B-1150 Bruxelles (BE)**

(74) Mandataire : **Lederer, Franz, Dr. et al**
**Patentanwälte Dr. Lederer Franz Meyer-Roxlau Rei-**
**ner F. Lucile-Grahn-Strasse 22**
**D-8000 München 80 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention concerne l'utilisation du peroxyde de calcium pour l'alimentation des porcins. Elle concerne également un procédé pour l'alimentation des porcins.

Un problème fondamental qui se pose dans l'élevage des porcs à viande est d'assurer leur croissance rapide tout en évitant de provoquer des dépôts graisseux trop importants. Ce problème est partiellement résolu en veillant à maintenir les animaux en bonne santé, en les vaccinant et en leur administrant, si nécessaire, des agents bactéricides tels que des antibiotiques, ainsi qu'en leur fournissant une alimentation adéquate. Celle-ci est constituée essentiellement de céréales convenablement additionnées de compléments en protéines et en minéraux. On peut ainsi obtenir des gains de poids journaliers pendant l'engraissement de 500 à 700 g. Cependant, la qualité moyenne des carcasses des porcs ainsi alimentés laisse cependant beaucoup à désirer.

La présente invention vise dès lors à procurer des compositions alimentaires pour porcins qui permettent d'augmenter le pourcentage de viande maigre et d'améliorer la qualité des carcasses. Ces compositions permettent également d'obtenir des gains de poids journaliers pendant l'engraissement particulièrement élevés.

L'invention concerne à cet effet l'utilisation du peroxyde de calcium dans des compositions alimentaires pour porcins.

Le peroxyde de calcium présent dans les compositions alimentaires pour porcins peut être de toute qualité connue. On utilise en général un produit commercial. Les produits commerciaux contiennent en général de 30 à 90 % de peroxyde de calcium, le solde étant constitué de divers composés tels que l'oxyde, l'hydroxyde ou le carbonate de calcium ou l'eau et se présentent sous la forme de particules.

D'autres qualités de peroxyde de calcium peuvent également convenir.

Le peroxyde de calcium est en général introduit dans les compositions alimentaires pour porcins en proportions telles que la ration de peroxyde intégrée quotidiennement soit d'au moins 0,02 % et de préférence d'au moins 0,05 % de peroxyde (à 100 %) par rapport au poids de la ration alimentaire totale. En général ces proportions sont telles que la ration de peroxyde ingérée quotidiennement ne dépasse pas 1,3 % et de préférence 0,7 % du poids de la ration alimentaire totale.

Les compositions alimentaires peuvent se présenter sous la forme d'un aliment complet. Ainsi, elles peuvent être constituées principalement d'une ou plusieurs matières alimentaires pour porcins telles que des céréales (orge, maïs, avoine, blé, sorgho, soja, seigle, milet) et des tourteaux de graines oléagineuses. Les compositions alimentaires complètes peuvent contenir en outre de petites quantités d'additifs habituellement présentes dans les compositions de ce genre tels que des sels minéraux, des vitamines, des oligo-éléments, des acides aminés, des aromatisants, des liants et des antibiotiques ou d'autres agents bactéricides.

Les compositions alimentaires complètes peuvent se présenter sous différentes formes physiques par exemple sous forme de pastilles compactées, de granules, de poudres ou même sous forme semi-liquides.

Les compositions alimentaires peuvent également se présenter sous forme de complément à l'alimentation normale. Dans ce cas, elles peuvent être constituées essentiellement de peroxyde de calcium ou encore contenir outre le peroxyde de calcium, divers autres additifs tels que des vitamines, des sels minéraux, des oligo-éléments, des acides aminés, des produits aromatisants et des liants ainsi que certaines substances actives adaptées aux besoins spécifiques de l'animal. Ces compléments peuvent se présenter sous différentes formes physiques (poudres, pastilles compactées, ou granulés voire éventuellement sous forme liquide ou semi-liquide) et peuvent être donnés aux animaux sous forme de ration distincte des aliments. On peut également, de façon avantageuse, les mélanger au moment de l'emploi aux rations alimentaires. De telles compositions de compléments d'alimentation contiennent, en général de 5 à 90 % et le plus souvent de 10 à 60 % en poids de peroxyde de calcium.

L'invention concerne également un procédé pour l'alimentation des porcins selon lequel on leur administre par voie orale du peroxyde de calcium. Les quantités administrées sont en général telles que la ration intégrée quotidiennement soit de 0,02 à 1,3 %, et de préférence de 0,05 à 0,7 % du poids de la ration alimentaire totale. Ces quantités peuvent être administrées quotidiennement pendant n'importe quelle période et même pendant toute la durée de vie de l'animal.

Afin d'illustrer l'invention, on donne ci-après des exemples pratiques d'application.

## Exemple

Trois lots de 15 porcs mâles castrés de deux mois, en bonne santé et d'un poids moyen d'environ 30 kg ont été utilisés (lots I à III). Ils ont été placés par groupes de 5 animaux de poids comparables dans des loges. Les animaux ont été élevés dans d'excellentes conditions sanitaires.

La période d'engraissement a été de 3 mois. Pendant toute cette période les animaux ont reçu, ad libitum et à l'exclusion de tout autre aliment, une farine sèche pour porcs de type 29, vendue par INTERAGRI, de 0,95 unités fourragères et de bonne qualité bactériologique, contenant 16,2 % de protéines et ayant une teneur énergétique de 9 200 kj/kg et complétée par 0,01 % de $CaO_2$ à 100 % (lot I, groupes 1 à 3), 0,3 % de $CaO_2$ à 100 % (lot II, groupes 4 à 6) et 0,6 % de $CaO_2$ à 100 % (lot III, groupes 7 à 9), ainsi que par du carbonate de calcium de manière à assurer un rapport pondéral calcium sur phosphore de 1,3 dans tous les cas.

Le peroxyde de calcium a été mis en œuvre sous forme d'un produit contenant 75 % de $CaO_2$.

Les performances d'engraissement par groupe de porcs sont récapitulées au Tableau I ci-après. L'indice de consommation (Ic) représente la consommation totale en poids d'aliments rapportée au gain de poids pendant toute la durée de l'essai.

(Voir tableau I, page 4)

Tableau I

| Lot Groupe | Lot I | | | | Lot II | | | | Lot III | | | |
|---|---|---|---|---|---|---|---|---|---|---|---|---|
| | 1 | 2. | 3 | moyenne | 4 | 5 | 6 | moyenne | 7 | 8 | 9 | moyenne |
| Teneur en $CaO_2$ (100%) dans la ration alimentaire % | 0,01 | | | | 0,3 | | | | 0,6 | | | |
| Poids départ, kg | 24,8 | 27,9 | 30,3 | 27,7 | 25,1 | 28,0 | 30,3 | 27,8 | 24,8 | 28,1 | 30,5 | 27,8 |
| Poids final, kg | 93,1 | 91,4 | 94,3 | 92,9 | 95,5 | 94,6 | 93,4 | 94,5 | 89,8 | 95,3 | 92,1 | 92,4 |
| Croissance, g/jour | 740 | 706 | 717 | 721 | 745 | 732 | 693 | 723 | 654 | 706 | 733 | 698 |
| Consommation, kg/jour | 2,65 | 2,55 | 2,69 | 2,63 | 2,57 | 2,70 | 2,78 | 2,68 | 2,40 | 2,61 | 2,93 | 2,65 |
| Ic | 3,58 | 3,61 | 3,75 | 3,65 | 3,45 | 3,69 | 4,01 | 3,72 | 3,68 | 3,69 | 3,99 | 3,79 |
| Durée engraissement, jours | 92,2 | 90,0 | 89,3 | 90,5 | 94,5 | 91,0 | 91,0 | 92,2 | 99,4 | 95,2 | 84,0 | 92,9 |

Après environ trois mois, 41 animaux ont été abattus dont 13 du lot I et 14 de chacun des lots II et III. Les carcasses ont été classifiées conformément à la norme CEE selon laquelle les sigles ci-après ont les significations suivantes :

AA : très bon porc de viande
A : porc de viande
B : porc moyen de viande
I : porc maigre
II : porc demi-gras
III : porc gras.

La répartition des porcs par catégorie dans chaque lot et le prix moyen obtenu à la vente par lot sont donnés au Tableau II.

Tableau II

| Catégorie | | Nombre de carcasses | | |
|---|---|---|---|---|
| Classement CEE | Prix au kg en francs belges | Lot I | Lot II | Lot III |
| AA | 65,0 | – | – | 3 |
| IA | 60,0 | 4 | 7 | 3 |
| IB | 56,5 | 5 | 3 | 4 |
| IIA | 56,0 | 3 | 3 | 3 |
| IIB | 50,5 | 1 | 1 | 1 |
| Prix moyen du lot francs belges par kg | | 57,0 | 57,71 | 58,53 |

**Revendications**

1. Utilisation du peroxyde de calcium pour l'alimentation des porcins.

2. Utilisation selon la revendication 1, caractérisée en ce que le peroxyde de calcium est associé aux matières alimentaires pour porcins.

3. Utilisation selon l'une quelconque des revendications 1 et 2, caractérisée en ce que le peroxyde de calcium est associé à de petites quantités d'additifs habituellement présents dans les compositions alimentaires pour porcins.

4. Utilisation selon la revendication 3 caractérisée en ce que les additifs sont des sels minéraux, des vitamines, des oligo-éléments, des acides aminés, des aromatisants, des liants ou des antibiotiques ou autres agents bactéricides.

5. Procédé pour l'alimentation des porcins caractérisé en ce qu'on leur administre par voie orale du peroxyde de calcium.

6. Procédé selon la revendication 5, caractérisé en ce qu'on leur administre le peroxyde de calcium à raison de 0,05 à 0,7 % du poids de la ration alimentaire totale.

**Claims**

1. Use of calcium peroxide for feeding pig.

2. Use according to claim 1, characterized in that the calcium peroxide is added to foodstuffs for pigs.

3. Use according to one of claims 1 and 2, characterized in that the calcium peroxide is mixed with small quantities of additives normally present in food compositions for pigs.

4. Use according to claim 3, characterized in that the additives used are mineral salts, vitamins, oligoelements, amino acids, flavouring compounds, binders or antibiotics or other bactericides.

5. Process for feeding pig, characterized in that the calcium peroxide is administered orally.

6. Process according to claim 5, characterized in that the calcium peroxide is administerd at a ratio of 0,05 to 0,7 weight percent of the total food quantity.

## Patentansprüche

1. Verwendung von Kalziumperoxid für die Ernährung von Schweinen.

2. Verwendung nach Anspruch 1, dadurch gekennzeichnet, daß das Kalziumperoxid Futtermitteln für Schweine zugesetzt wird.

3. Verwendung nach einem der Ansprüche 1 und 2, dadurch gekennzeichnet, daß das Kalziumperoxid einer geringen Menge von Zusätzen beigefügt wird, welche gewöhnlich in Futtermittelzusammensetzungen für Schweine zu finden sind.

4. Verwendung nach Anspruch 3, dadurch gekennzeichnet, daß es sich bei den Zusätzen um Mineralsalze, Vitamine, Oligoelemente, Aminosäuren, Aromaten, Bindemittel oder Antibiotika oder sonstige Bakterizide handelt.

5. Verfahren zur Ernährung von Schweinen, dadurch gekennzeichnet, daß man ihnen Kalziumperoxid oral verabreicht.

6. Verfahren nach Anspruch 5, dadurch gekennzeichnet, daß das Kalziumperoxid in einer Menge von 0,05 bis 0,7 Gewichtsprozent der Gesamtfuttermenge verabreicht wird.